# EUROPEAN PATENT APPLICATION

(11) **EP 2 538 181 A2**
(43) Date of publication of application: **26.12.2012**
(21) Application number: 12172638.4
(22) Date of filing: 19.06.2012
(51) Int. Cl.: G01F 23/30, G01F 23/38

(54) **System for detecting a degree of filling of an LPG tank and for transmitting the measurement to a remote station**

(30) Priority: 20.06.2011 IT BO20110351
(71) Applicant: Alfa Centauri S.p.A., 66016 Guardiagrele (CH) (IT)
(72) Inventor: Tabellario, Mario, 65122 Pescara (IT)
(74) Representative: Dall'Olio, Christian

(57) **Abstract**

A system for detecting a degree of filling of an LPG tank and for transmission of a measurement to a remote station, comprising: a box container conformed such as to receive a magnetic level indicating device (12) of a degree of filling of the tank (S); a magnetic transducer (11), connected to a control unit (C) for processing data received from the magnetic transducer (11) and for transmission of the data to a remote station; a rod (2) interested at respective ends thereof by magnetic elements (21 a, 21 b), upper and lower, rotatable with respect to an axis thereof internally of a sleeve (20) fixed to the base of the container (10), at a side of the supply means (B), and terminating with an attachment (I) defining the mutual coupling between the system and the upper head (T) of an LPG level indicator arranged internally of the tank (S).

## Description

### DESCRIPTION OF THE INVENTION

The present invention relates to the technical sector of systems for detecting a degree of filling of an LPG tank.

The aim of the invention is that it provides a system conformed in such a way as to enable detecting a degree of filling of a tank containing LPG and transmission of the measurement to a remote station; this has the aim of minimising the means used for carrying out the transmission of the detected data.

A further aim of the invention is to provide a system conformed in such a way as to be applied directly on the level indicator equipped in series with each LPG tank.

A further aim of the invention is to provide a system which is reliable, functional and has modest costs with respect to the advantages it intends to provide.

The above aims are attained according to the contents of the claims.

The characteristics of the invention will be set out in the following, in which a preferred but not exclusive embodiment of the invention is described, with reference to the accompanying tables of the drawings, in which:

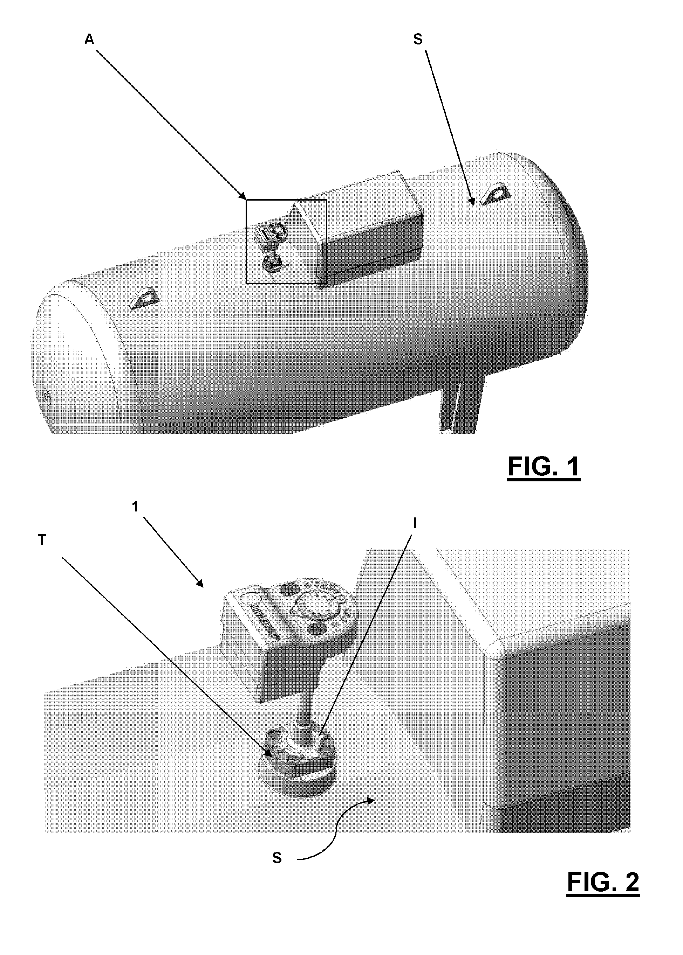

figure 1 illustrates a perspective view of a tank containing LPG to which the system of the invention is associated;
figure 2 is an enlarged view of detail A of figure 1;
figure 3 is a larger-scale view of a vertical section of the detail of figure 2, i.e. the system of the invention.

With reference to the accompanying tables of drawings, S denotes a tank containing LPG; T is the upper head of a level indicator internal of the tank, for example of a type comprising a float connected, by known methods, to a vertical rod which at a top thereof bears, close to the upper head , a permanent magnet.

Reference numeral 1 denotes a system for detecting a degree of filling of a tank S containing LPG and for transmission of the measurement to a remote station, connected to the upper head T of the level indicator via an attachment I a conformation of which is such as to be complementary to a conformation of the upper head T.

The system comprises a box container 10 conformed such as to contain, in order from top to bottom: a magnetic level indicating device 12 of a degree of filling of the tank S, for example defined by a known disc, not illustrated, exhibiting a graduated scale indicator to which an index subject to a magnet M is associated; a magnetic transducer 11 connected to an adjacent control unit C, the control unit C being for processing the data received from the magnetic transducer 11 and transmission of the data to a remote station (not illustrated); supply means of the control unit C, constituted by a battery.

The system further comprises a rod 2 exhibiting at respective ends thereof upper and lower magnetic elements 21a, 21b; the rod 2 is rotatable with respect to the axis thereof internally of a sleeve 20 fixed, in a known way, to the base of the container 10 at the side of the supply means B and developing, outside the container 10, vertically downwards, and terminating at the attachment I, thus defining a mutual coupling between the system of the invention and the upper head T of the level indicator.

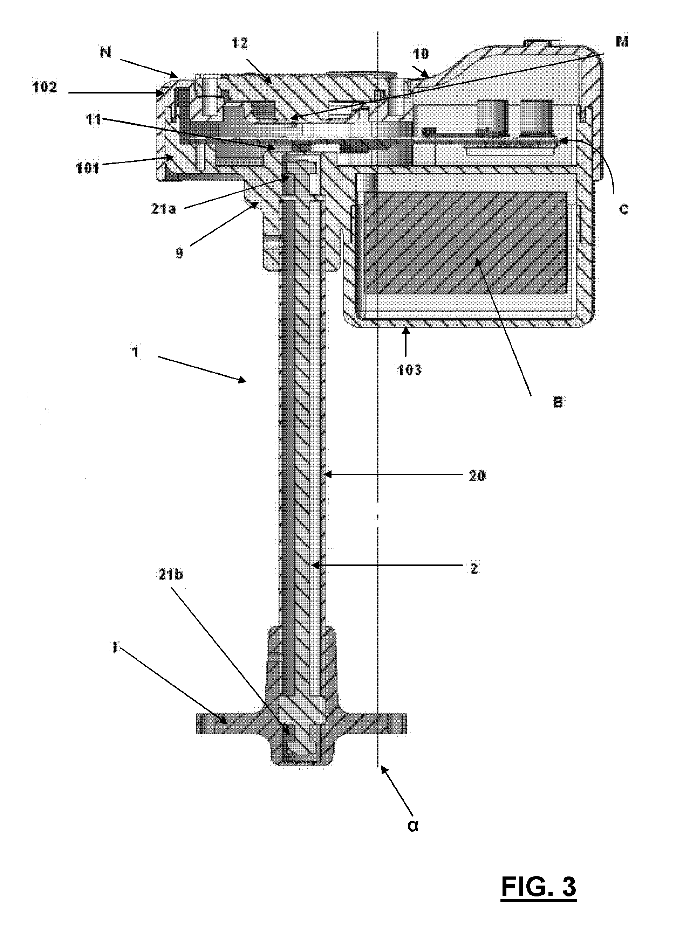

In the preferred embodiment the container 10 is defined by: a box element (101), in which the magnetic transducer 11 and the control unit C are inserted, the box element 101 inferiorly conforming, in an offset position with respect to the halfway plane α, a bushing 9 to which the sleeve is fixed 20; a cover 102 superiorly interested by a housing N overlying the magnetic transducer 11, in which the magnetic level indicator device 12 is orientated and fixed; a containing body 103 of the supply means B, inferiorly associated to the box element 101 by a side of the sleeve 20 (figure 3).

As previously described, the system 1 is mutually coupled to the upper head T comprised in the wall of the tank S by means of insertion and stabilisation of the attachment I therein; it follows that the lower magnetic element 21 b of the rod 2 defines a magnetic coupling with the magnet of the level indicator provided in the tank S, so that to variations in the level of the float thereof there correspond oscillations of the rod 2 with respect to the axis thereof; it follows that to a corresponding angular position of the rod 2 and, consequently, of the upper magnetic element 21A, there corresponds a precise orientation of the magnetic field produced thereby.

The magnetic field causes, as described in detail in Italian patent no. 263.554 belonging to the same applicant, both rotation of the index of the magnetic device for level indication 12 and, on the part of the magnetic transducer 11, detection of the orientation relative to the magnetic field produced by the upper magnetic element 21a from which information can be extrapolated that is associated to the degree of filling of the tank S and consequently transmission of the information to the control unit C.

The main advantage of the present invention consists in having defined a system, an optimal conformation of which enables, thanks to the presence of the container 10, in which are appropriately inserted: the magnetic level indicator device 12, the magnetic transducer 11, the control unit C and the supply means B, and in that it provides a magnetic coupling between the magnetic level indicator device 12 and the magnetic transducer 11, and the upper head T of the level indicator provided in the tank, and also provides, in a single system, the possibility of detecting, processing and transmitting the information relating to the measurement of the degree of filling of the tank S.

Thus, the application of systems for centralised management of the control systems and the filling of the LPG tank are simplified; in fact, the traditional systems comprise, beyond the positioning of the transducer on the tank, also a physical connection for connecting the tank to an external control unit which processes and transmits, to the remote station, the information relating to the measuring of the degree of filling of the tank S: this connection might be complicated due to the position of the tank with respect to the position of the control unit, with all the drawbacks inherent thereto in terms of installation time, materials used and stability of connection.

Note that the conformation of the container 10 is such as to enable the system of the invention to operate even when immersed in water.

Further, with the present invention, it is advantageous to comprise the use of sensor means, functionally connected to the tank S and the control unit C, able to detect damage to the LPG tank and/or the level indicator, which would determine the definition of an error condition in the control unit, which in turn would then send an alarm signal to the remote station to ensure an immediate maintenance intervention.

A further advantage of the invention consists in having defined a system the costs of which are relatively modest.

The system of the present invention can be advantageously comprised also in technical sectors that are distinct from the field relating to the simple detecting of the degree of filling of the LPG tank, as the system itself, thanks to the magnetic transducer, can extrapolate information associated to the orientation of a magnetic field, which in turn depends on the value assumed by a magnitude to be measured.

By way of example, the system can be integrated into apparatus destined for detecting a level of a generic fluid contained internally of a suitable tank therefor (fuel, water, etc).

The above is in any case described by way of non-limiting example, and any eventual modifications in the details, as well as variations in shape and dimensions of the described components, are understood to fall within the scope of protection as set down in the appended claims.

## Claims

1. A system for detecting a degree of filling of an LPG tank and for transmission of a measurement to a remote station, of a type comprising: a level indicator provided in the tank (S), to which a source of a magnetic field is associated; a magnetic level indicating device (12) of a degree of filling of the tank (S); a magnetic transducer (11), interposed between the source and the magnetic level indicating device (12), for detecting an orientation of a magnetic field generated such as to extrapolate the measurement of the filling level of the tank (S); a control unit (C) for processing data received from the magnetic transducer (11) and for transmission of the data to a remote station; the system being **characterised in that** it comprises: a box container (10) for containing the magnetic level indicating device (12) of the magnetic transducer (11), and the control unit (C), connected to the magnetic transducer (11), and supply means (B) of the control unit; connecting means between the magnetic transducer and the level indicator provided in the tank (S).

2. The system of claim 1, **characterised in that** the connecting means comprise a rod (2) exhibiting, at the respective ends thereof, upper and lower magnetic elements (21 a, 21 b), the upper magnetic element being associated to the magnetic transducer (11) and the lower magnetic element (21 b) defining a magnetic coupling with the magnetic source of the level indicator, with the rod (2) being rotatable about an axis thereof internally of a sleeve (20), the sleeve (20) being fixed to a base of the container (10); an attachment (I) fixed to a terminal part of the sleeve (20) destined to define a mutual coupling between the lower element (21 b) of the rod (2) and the upper head (T) of the level indicator.

3. The system of claim 2, **characterised in that** the container (10) is defined by: a box element (101), in which the magnetic transducer (11) and the control unit (C) are inserted, the box element (101) inferiorly conforming, in an offset position with respect to the halfway plane (α), a bushing (9) to which the sleeve is fixed (20); a cover (102) superiorly interested by a housing (N) overlying the magnetic transducer (11), in which the magnetic level indicator device (12) is orientated and fixed; a containing body (103) of the supply means (B), inferiorly associated to the box element (101) by a side of the sleeve (20).

4. The system of claim 3, **characterised in that** the supply means (B) are constituted by a battery.
